(19) **Europäisches Patentamt**
**European Patent Office**
**Office européen des brevets**

(11) **EP 1 673 878 B1**

(12) **EUROPEAN PATENT SPECIFICATION**

(45) Date of publication and mention
of the grant of the patent:
**18.06.2008 Bulletin 2008/25**

(51) Int Cl.:
**H04B 1/707** *(2006.01)* **H04B 1/10** *(2006.01)*

(21) Application number: **04767119.3**

(22) Date of filing: **12.10.2004**

(86) International application number:
**PCT/FI2004/000605**

(87) International publication number:
**WO 2005/036770 (21.04.2005 Gazette 2005/16)**

(54) **METHOD FOR SUPPRESSING INTERFERENCE AND ARRANGEMENT FOR SAME, AND RADIO COMMUNICATIONS RECEIVER**

VERFAHREN ZUR STÖRUNGSUNTERDRÜCKUNG UND ANORDNUNG DAFÜR UND FUNKKOMMUNIKATIONSEMPFÄNGER

PROCEDE POUR SUPPRIMER LES INTERFERENCES ET DISPOSITIF ASSOCIE ET RECEPTEUR DE RADIOCOMMUNICATIONS

(84) Designated Contracting States:
**AT BE BG CH CY CZ DE DK EE ES FI FR GB GR HU IE IT LI LU MC NL PL PT RO SE SI SK TR**

(30) Priority: **13.10.2003 FI 20031492**
**12.02.2004 US 776501**

(43) Date of publication of application:
**28.06.2006 Bulletin 2006/26**

(73) Proprietor: **Nokia Corporation**
**02150 Espoo (FI)**

(72) Inventors:
• **AROMAA, Sami**
**FI-90550 Oulu (FI)**
• **HENTTU, Pertti**
**FI-90470 Varjakka (FI)**

(74) Representative: **Pykälä, Timo Tapani**
**Kolster Oy Ab,**
**P.O. Box 148,**
**Iso Roobertinkatu 23**
**00121 Helsinki (FI)**

(56) References cited:
**WO-A1-02/091610** **US-A- 5 612 978**

• **VARTIAINEN J. ET AL.:** 'Selection process of a trnsfrom selective interference suppression algorithm' NORSIG 2004, PROCEEDINGS OF THE 6TH NORDIC SIGNAL PROCESSING SYMPOSIUM 09 June 2004 - 11 June 2004, pages 220 - 223, XP010732579
• **HENTTU P. ET AL.:** 'Sonsecutive mean excision algorithm' 2002 IEEE SEVENTH INTERNATIONAL SYMPOSIUM ON SPREAD SPECTRUM TECHNIQUES AND APPLICATIONS vol. 2, 02 September 2002 - 05 September 2002, pages 450 - 454, XP010615509 & DATABASE INSPEC [Online] Database accession no. 7626317
• **HENTTU P. ET AL.:** 'Interference suppression in DS7FH system using modified two sided adaptive filter' MILCOM 2001, MILITARY COMMUNICATIONS CONFERENCE, COMMUNICATIONS FOR NETWORK-CENTRIC OPERATIONS: CREATING THE INFORMATION FORCE, IEEE vol. 2, 28 October 2001 - 31 October 2001, pages 1429 - 1433, XP010579238 & DATABASE INSPEC [Online] Database accession no. 7373588
• **TAZEBAY M.V. ET AL.:** 'A performance analysis of interference excision techniques in direct sequence spread spectrum communications' IEEE TRANSACTIONS ON SIGNAL PROCESSING vol. 46, no. 9, September 1998, pages 2530 - 2535, XP000850734 & DATABASE INSPEC [Online] Database accession no. 6024987

## Description

### Field

The invention relates to a method for suppressing interference in a radio communications receiver, an arrangement for interference suppression in a radio communications receiver, and a radio communications receiver.

### Background

A radio communications receiver can sustain interference to some degree. If the power of the interference exceeds the processing gain of the system, additional interference suppression is needed.

The performance of the traditional FFT-based (Fast Fourier Transform) exciser is adequate against stationary interference, i.e. such interference whose frequency contents do not change over an observation interval.

For other types of interference another transform might be more suitable. Several types of interference suppression methods have been investigated in different interfering environments. The problem is how to choose either in advance or adaptively the most efficient interference suppression for the interference type present in a channel.

A general solution for interference suppression is the Recursive Least Squares (RLS) adaptive filter. The problem of using the RLS filter is the computational complexity, numerical properties in fixed-point implementation and initialization.

Bank-type solutions have also been presented in the literature. For every interference suppression method included in the bank the interference suppression is performed completely including the inverse transform, and the best method is chosen based on some criterion, for example signal-to-interference-plus-noise ratio (SINR). Bank-type solutions therefore include lots of excessive computation.

### Brief description of the invention

The invention seeks to provide an improved method for suppressing interference in a radio communications receiver, an improved arrangement for interference suppression in a radio communications receiver, and an improved radio communications receiver.

According to an aspect of the invention, there is provided a method for suppressing interference in a radio communications receiver, the method comprising: computing at least one transform of a received, analogue-to-digital converted radio signal; computing metrics defining the concentration of the interference present both for the transformed radio signal and the non-transformed radio signal; selecting the transform whose metrics indicate the highest concentration of the interference in the transfer domain as the transform to be used, or selecting no transform if the metrics indicate the highest concentration of the interference for the non-transformed signal; suppressing the localized interference from the transformed radio signal by using weighting and computing inverse transform of the transformed radio signal if the transform was selected, or suppressing the localized interference from the non-transformed radio signal by using weighting if no transform was selected; and detecting and decoding the interference suppressed radio signal.

According to another aspect of the invention, there is provided an arrangement for interference suppression in a radio communications receiver, the arrangement comprising: a transformer configured to compute a transform of a received, analogue-to-digital converted radio signal; an interference estimator configured to compute metrics defining the concentration of the interference present both for the transformed radio signal and the non-transformed radio signal; a selector coupled to the interference estimator configured to select the transform whose metrics indicate the highest concentration of the interference in the transfer domain as the transform to be used, or to select no transform if the metrics indicate the highest concentration of the interference for the non-transformed signal; an interference suppressor coupled to the selector configured to suppress the localized interference from the transformed radio signal by using weighting if the transform was selected, or to suppress the localized interference from the non-transformed radio signal by using weighting if no transform was selected; and an inverse transformer coupled to the interference suppressor configured to compute inverse transform of the transformed radio signal if the transform was selected.

According to another aspect of the invention, there is provided a radio communications receiver comprising: means for computing at least one transform of a received, analogue-to-digital converted radio signal; means for computing metrics defining the concentration of the interference present both for the transformed radio signal and the non-transformed radio signal; means for selecting the transform whose metrics indicate the highest concentration of the interference in the transfer domain as the transform to be used, or for selecting no transform if the metrics indicate the highest concentration of the interference for the non-transformed signal; means for suppressing the localized interference from the transformed radio signal by using weighting and for computing inverse transform of the transformed radio signal if the transform was selected, or for suppressing the localized interference from the non-transformed radio signal by using weighting if no transform was selected; and means for detecting and decoding the interference suppressed radio signal.

The invention provides an adaptive, general method for suppressing several types of interference. In the invention, several transforms may be computed in parallel. The most suitable transform for the interference scenario or no transform is chosen based on the metrics defining the concentration of the interference present in a transformed or non-transformed signal block. The invented solution can be used for any number of different transforms that preserve signal energy. The invention provides the advantage that the interference suppression is adaptive: it adapts to suppress the interference with the best available strategy. The invention may be expanded to utilize an arbitrary number of transforms. The inverse transform and in some embodiments also the interference suppression are performed only after the transform choice, whereby computational load is reduced as compared to the bank-type solutions. The invention may be used to suppress interference external to the radio communications system used by the receiver. The invention may suppress chirp-type interference especially effectively.

**List of drawings**

In the following, the invention will be described in greater detail with reference to the embodiments and the accompanying drawings, in which

Figure 1 illustrates some parts of a radio communications receiver and an embodiment of an arrangement for interference suppression;
Figure 2 illustrates an embodiment of the arrangement for interference suppression using the Coding Gain;
Figure 3 is a flow diagram illustrating a method for suppressing interference in the radio communications receiver;
Figure 4 illustrates an alternative embodiment of the arrangement for interference suppression using the Coding Gain;
Figure 5 illustrates an embodiment of the arrangement for interference suppression receiving control from a radio frequency part;
Figure 6 illustrates concentration of interference;
Figure 7 illustrates an embodiment of the arrangement for interference suppression using the Consecutive Mean Excision Algorithm; and
Figures 8, 9, 10 and 11 illustrate the performance of the proposed practice.

**Description of embodiments**

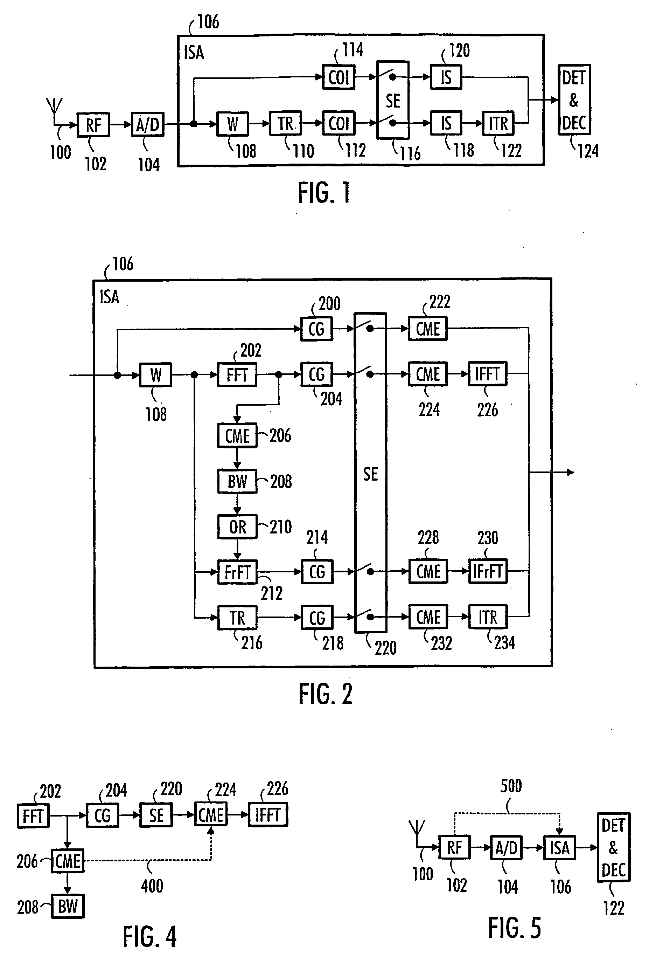

With reference to Figure 1, let us examine an example of a radio communications receiver. The communications system may be any known radio system where relatively narrow-band interference in comparison with the bandwidth of a received radio signal may be suppressed with the described action. Such broad-band radio systems include, but are not limited to, spread spectrum systems, either frequency hopping or direct sequence, such as CDMA (Code Division Multiple Access) or WCDMA (Wideband CDMA), a wireless local area network (WLAN), such as defined by standards in 802.11 series of the IEEE (The Institute of Electrical and Electronics Engineers, Inc.), or a radio system utilizing OFDM (Orthogonal Frequency Division Multiplexing).

The receiver includes an antenna 100 and a radio frequency part 102 for the reception of a radio frequency signal from the radio path. The antenna 100 may be any suitable prior art antenna system. Although only a single antenna is illustrated in our example, the proposed arrangement is applicable also to receivers utilizing diversity reception with multiple antennas. An analog radio frequency signal is received from the radio path by the antenna 100 and the radio frequency part 102. The radio frequency part 102 may include a filter, which prevents frequencies outside the desired frequency band, for example. Subsequently, the received radio signal is converted to an intermediate frequency or directly to baseband, in which form the signal is sampled and quantized and analogue-to-digital (A/D) converted in an A/D converter 104.

The receiver also includes an arrangement 106 for interference suppression. In our example, the arrangement 106 is coupled to the input of a signal detector and decoder 124 of the radio communications receiver. The signal detector and decoder 124 may be implemented according to the ways known in the art. The arrangement 106 may be implemented in various ways. The arrangement 106 includes processing blocks, memories and signal connections. The arrangement may be implemented using one or more processors with software, but different hardware implementations are also possible, such as a circuit made of separate logic components, one or more application-specific integrated circuits (ASIC), or a field programmable gate array (FPGA). A combination of these implementations is also possible. One possible implementation is such that static operations (transforms, for example) are computed using either ASICs or FPGAs, but adaptive computations are performed with the software run on digital signal processors (DSP). In selecting the implementation, a person skilled in the art will take into consideration for instance the requirements set on the size and power consumption of the device, the required processing power, manufacturing costs and production volumes. Receivers may also include other parts, but as their structure and functions are well known in the art, they need not be further described here. The receiver may be a Rake receiver used in CDMA systems, for example.

Figure 1 illustrates an embodiment of an arrangement 106 for interference suppression. The incoming radio signal is branched into at least two branches: in the first branch no transform is performed, and in the second branch a transform is performed.

The arrangement 106 comprises a transformer 110 configured to compute a transform of a received, analogue-to-digital converted radio signal. The arrangement 106 may also comprise a windowing block 108 that temporally windows the received radio signal before a transform computation.

The arrangement 106 comprises an interference estimator 112, 114 configured to compute metrics defining the concentration of the interference present both for the transformed radio signal and the non-transformed radio signal. In our example, the interference estimator is illustrated as two separate blocks, one 114 in the first branch and the other 112 in the second branch, but it is clear that the interference estimator may be implemented as one block with two inputs, one for the non-transformed signal and the other for the transformed signal. The metrics defining the concentration of the interference may define the power density concentration of the interference, for example.

The arrangement 106 comprises a selector 116 coupled to the interference estimator 112, 114 configured to select the transform whose metrics indicate the highest concentration of the interference in the transfer domain as the transform to be used, or to select no transform if the metrics indicate the highest concentration of the interference for the non-transformed signal.

The arrangement 106 further comprises an interference suppressor 118, 120 coupled to the selector 116 configured to suppress the localized interference from the transformed radio signal by using weighting if the transform was selected, or to suppress the localized interference from the non-transformed radio signal by using weighting if no transform was selected. Although in our example these interference suppressors 118, 120 are illustrated as separate blocks, one 120 in the first branch and the other 118 in the second branch, it is clear that the interference suppressor may be implemented as one block with two inputs, one for the non-transformed signal and the other for the transformed signal. The interference suppressor 118, 120 is configured to act on the incoming signal selected by the selector 116.

The arrangement 106 also comprises an inverse transformer 122 coupled to the interference suppressor 118 configured to compute inverse transform of the transformed radio signal if the transform was selected. In our example the inverse transformer 122 resides in the second branch.

After the interference has been suppressed from the received, analogue-to-digital converted radio signal, the interference-suppressed signal is fed into the input of the signal detector and decoder 124 of the radio communications receiver. Interference suppression is therefore performed on the non-detected and non-decoded signal.

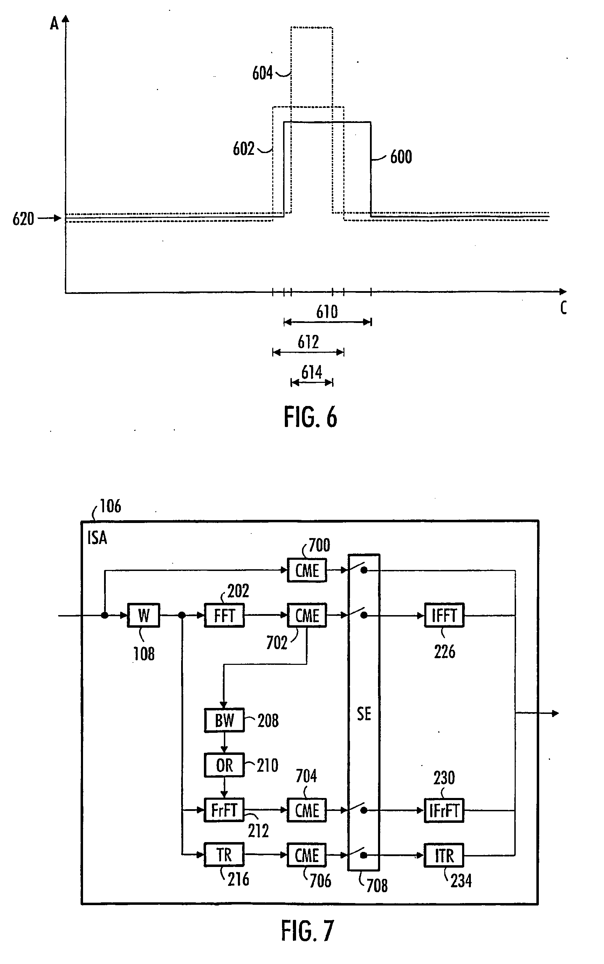

Figure 6 illustrates the concentration of the interference. The received signal is illustrated on the X-axis. The received signal may be illustrated with the chips of the signal, for example. The amplitude of the received signal is illustrated on the Y-axis. The received signal naturally also includes, besides the desired signal, background noise and interference. Let us suppose that we have three transforms, one of them being no transform. The received signal 600 is the non-transformed signal, the received signal 602 is transformed with the first transform, and the received signal 604 is transformed with the second transform. Peaks of the received signals 600, 602, 604 are localized as interference. The width 610 of the interference in the non-transformed signal 600, the width 612 of the interference in the signal 602 transformed with the first transform, and the width 614 of the interference in the signal 604 transformed with the second transform can be compared. The width 614 of the interference in the signal 604 transformed with the second transform is the narrowest, which indicates that the second transform most effectively suppresses the interference. This is due to the fact that in the received signal 604 the fewest chips are affected by the interference and thus by the interference suppression. Some chips may be lost in the interference suppression, the fewer the better, but the coding of payload signal protects a payload signal against such losses. It is therefore the responsibility of the signal detector and decoder 124 to salvage the information possibly lost in the interference suppression.

In an embodiment, the interference estimator 112, 114 is configured to estimate the metrics as Coding Gain (CG) of a time domain received signal. The term 'Coding Gain' does not refer to channel coding, but it measures the smoothness of the signal: if all the samples are approximately at the same level, CG is small and if there are high peaks, CG is large. CG defines how well the interference is concentrated in the transformed signal in the transfer domain or in the non-transformed signal in the time domain. The Coding Gain has formerly been used in video coding, in laboratory research, to see how well the video signal is compressed with different coding techniques. The Coding Gain is described in the following publication: Kok C. W. & Nguyen T.Q. (1998) Multirate Filter Banks and Transform Coding Gain, IEEE Transactions on Signal Processing, vol. 46 no. 7, pp. 2041 to 2044.

Figure 2 illustrates an embodiment of the arrangement 106 for interference suppression using the Coding Gain. Basically the structure in Figure 2 is the same as in Figure 1. However, a selector 220 has a more complicated structure than the selector 116 in Figure 1: it has four input lines. Other differences will be explained below.

The interference estimators 112, 114 have been replaced with interference estimators 200, 204, 214, 218 utilizing the Coding Gain.

In an embodiment, the interference estimator 200, 204, 214, 218 is configured to compute the Coding Gain with the equation

$$CG = \frac{\frac{1}{N}\sum_{n=1}^{N}|r(n)|^2}{N\sqrt{\prod_{n=1}^{N}|r(n)|^2}}, \qquad\qquad (1)$$

wherein N is the length of the block, and
r(n) is the received radio signal sample. Another equation giving the mathematically equivalent result may also be used. The larger the metrics obtained from the equation 1, the higher the concentration of the interference.

In an embodiment, the selector 220 is further configured to examine the Coding Gain as relative magnitudes between different transforms, including non-transform, and the interference estimator 200, 204, 214, 218 is configured to compute the Coding Gain with the equation

$$CG' = \frac{1}{N\sqrt{\prod_{n=1}^{N}|r(n)|^2}}, \qquad\qquad (2)$$

wherein N is the length of the block, and
r(n) is the received radio signal sample. Another equation giving the mathematically equivalent result may also be used. The computations of the equation 2 are simpler than those of equation 1: instead of computing both the arithmetic mean and the geometric mean only the geometric mean needs to be computed. The simpler equation may be used, because the nominator, which represents the average power, is the same for all transforms preserving the energy of the received signal.

Figure 2 also illustrates an embodiment where three transforms are used: the transformer 202 uses Fast Fourier Transform (FFT), the transformer 212 uses Fractional Fourier Transform (FrFT), and the transformer 216 uses another transform having inverse transform and metrics defining the concentration of the interference present in the transformed radio signal. Such other transforms include Discrete Cosine Transform (DCT), Karhunen-Loeve Transform (KLT), and a wavelet transform. The DCT and wavelet transform are described in literature, such as Gonzalez R. E. & Woods R. C. (2002) Digital Image Processing, pp. 372 to 376 and 470 to 479. The KLT is also described in literature, such as Haykin S. (1996) Adaptive Filter Theory, pp. 175 to 176 and 460 to 461. Instead of the two branches of Figure 1, there are now four branches in the arrangement 106. There is also an inverse transformer for each of the transforms: an inverse transformer 226 configured to compute an inverse transform of the FFT, an inverse transformer 230 configured to compute an inverse transform of the FrFT, and an inverse transformer 234 configured to compute an inverse transform of the transform performed in the transformer 216.

In an embodiment, the interference suppressor 222, 224, 228, 232 is configured to perform the suppression of the localized interference with a Consecutive Mean Excision Algorithm (CME). The use of the CME for interference suppression is described in the applicant's application WO 02/091610 and also in the following publication: Henttu P. & Aromaa S. (2002) Consecutive Mean Excision Algorithm, Proceedings of IEEE International Symposium on Spread Spectrum Techniques and Applications, vol. 2, pp. 450 to 454.

Figure 2 thus also illustrates an embodiment, wherein the arrangement 106 comprises at least two transformers: the first transformer 202 is configured to use the FFT as the transform, and the second transformer 212 is configured to use the FrFT as the transform. In connection with this embodiment, an embodiment is also illustrated wherein the arrangement 106 also comprises a Consecutive Mean Excision Algorithm (CME) processor 206 coupled to the first transformer 202 configured to perform on the FFT-transformed signal the CME in order to localize the interference, a bandwidth determiner 208 coupled to the CME processor 206 configured to determine the bandwidth of the interference, and an order determiner 210 coupled to the bandwidth determiner 208 and to the second transformer 212 configured to determine the order of the FrFT based on the bandwidth of the interference and to supply the order of the FrFT to the second transformer 212.

Figure 4 illustrates an alternative embodiment of the arrangement 106 of Figure 2. In this alternative embodiment the interference suppressor 224 is configured to perform the suppression of the localized interference from the transformed radio signal by using the results of the previously performed CME in the CME processor 206 if the FFT was selected as the transform. As illustrated in Figure 4, with the array 400 the CME processor 206 supplies the results of the performed CME to the interference suppressor 224. This embodiment reduces the needed processing capacity in the arrangement 106.

Figure 5 illustrates an embodiment of the arrangement 106 for interference suppression receiving control 500 from the radio frequency part 102. As was explained earlier with reference to Figure 1, the radio communications receiver comprises a radio frequency processing part 102. The arrangement 106 is configured to receive information 500 on interference present in the received radio signal from the radio frequency processing part 102 and to utilize the received information 500 in the interference estimator 112, 114 and the interference suppressor 118, 120 for localizing and suppressing the interference. Such interference may be burst-like, for example.

Figure 7 illustrates an embodiment of the arrangement 106 for interference suppression using the Consecutive Mean Excision Algorithm (CME). In this embodiment, the interference estimators 200, 204, 214, 218 of Figure 2 are replaced by interference estimators 700, 702, 704, 706 configured to calculate the metrics with the CME. The selector 220 of Figure 2 is also replaced by a selector 708 operating with the results of the CME instead of the CG. The advantage of this embodiment is that, as can be seen in Figure 7, no separate interference suppressors 222, 224, 228, 232 are needed after the selector 708 as in Figure 2. Blocks 700, 702, 704, 706 thus perform interference estimation, localization and suppression.

In an embodiment, the interference estimator 700, 702, 704, 706 is further configured to determine with the CME background noise level of the received radio signal, and to localize as interference those parts of the signal exceeding the background noise level. In the example of Figure 6, the background noise level may be about amplitude 620.

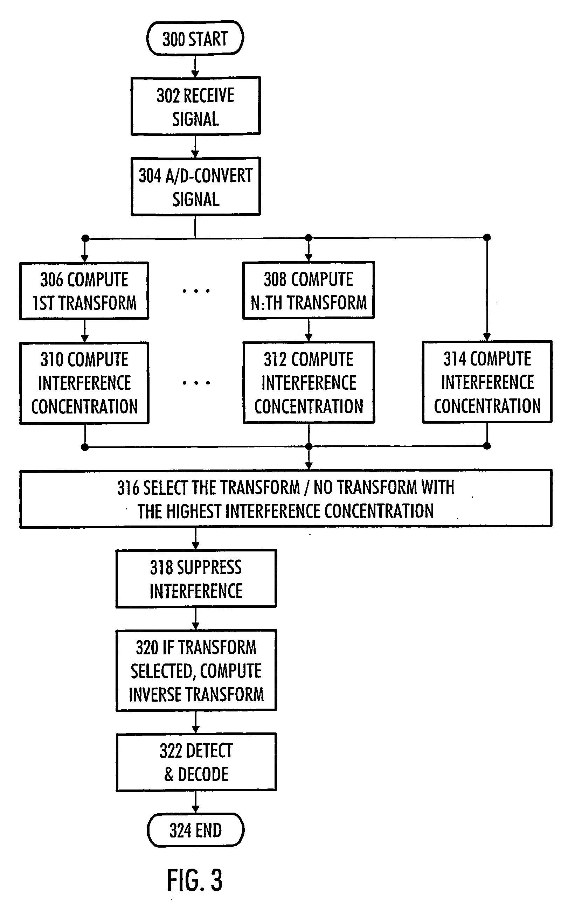

Next, with reference to Figure 3, a method for suppressing interference in the radio communications receiver is explained. The method is started in 300. Next, a radio signal is received in 302, and an A/D conversion is performed for the received signal in 304.

Then, at least one transform of a received, analogue-to-digital converted radio signal is computed. N transforms are computed in our example in 306, 308. N is a positive integer that is bigger than one.

Next, both for the transformed radio signal and the non-transformed radio signal metrics defining the concentration of the interference present is computed in 310, 312, 314.

Next, in 316, the transform whose metrics indicate the highest concentration of the interference in the transfer domain is selected as the transform to be used, or no transform is selected if the metrics indicate the highest concentration of the interference for the non-transformed signal.

In 318 and 320, the localized interference from the transformed radio signal is suppressed by using weighting and inverse transform of the transformed radio signal is computed if the transform was selected, or, in 318, the localized interference is suppressed from the non-transformed radio signal by using weighting if no transform was selected.

After the described interference suppression has been completed, the interference suppressed radio signal is detected and decoded in 322.

After all the received signals have been processed, the method may be ended in 324.

The method may be adapted according to the accompanying dependent method claims. As their contents have already been explained in connection with the arrangement 106, the explanation is not repeated here. It should be noted, however, that even though the method may be implemented with the described arrangement 106 it may also be implemented in other suitable radio receivers where the concentration of interference can be estimated and the interference can be located.

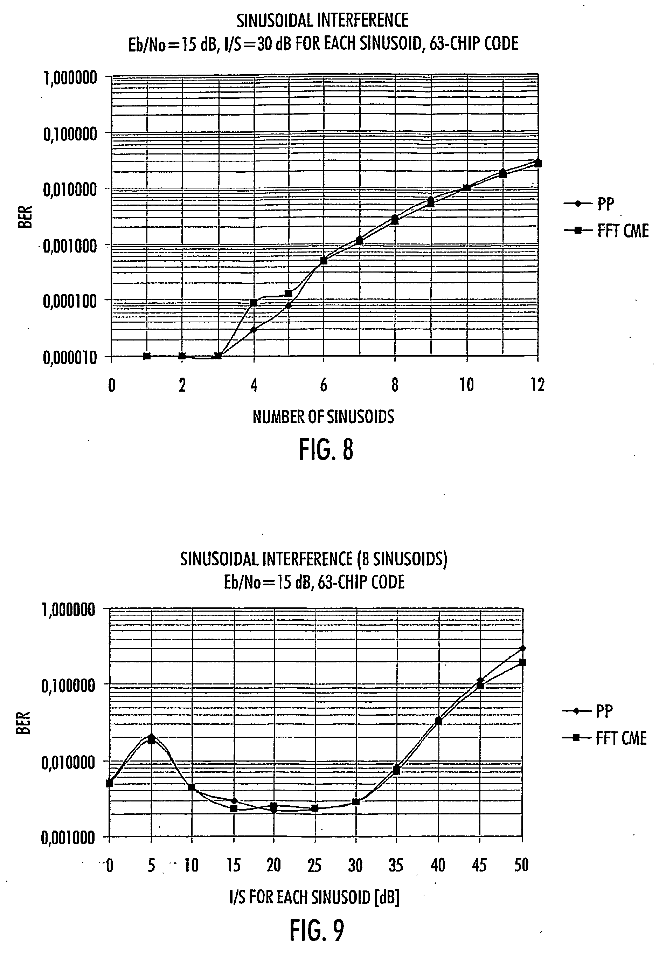

The performance of the proposed practice was evaluated through Monte Carlo computer simulations. The results of these simulations are illustrated in Figures 8, 9, 10 and 11. The proposed practice is denoted with PP, other practices are pure FTT with the CME-based interference suppression and pure FrFT with the CME-based interference suppression.

Figures 8 to 11 present the worst-case performance. A single channel FFT CME notch filter structure was used. Double channel FFT filter improves the performance by 2.5 decibels in terms of the SNR. The proposed practice also works with the double channel structure. The simulated communications system was a direct sequence spread spectrum radio system. The spreading code was a 63-chip Gold code and the signal-to-noise ratio (SNR) was set to 15 decibels. Three interference scenarios - sinusoidal interference, chirp interference and raised cosine filtered binary phase shift keying (BPSK) modulated interference - were considered. The interference-to-signal power ratio (I/S) was set to 30 decibels except in one simulation where the I/S was set to be variable.

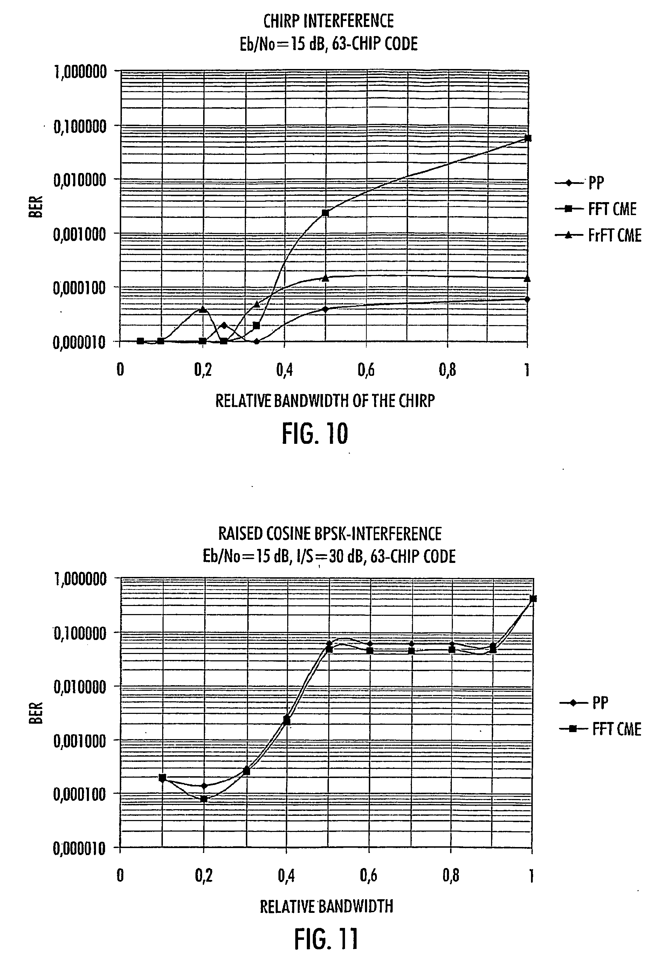

The performance is evaluated in the presence of multiple sinusoidal interference in Figures 8 and 9, and in the presence of band-limited communication signal interference in Figure 11. As can be seen in Figures 8, 9 and 11, the proposed practice is as good as the reference practice, i.e. the proposed practice manages to select the transform with which the interference can be most effectively suppressed.

The performance is evaluated in the presence of chirp interference in Figure 10. Here the results with the proposed practice are clearly better than with the two reference practices. It can be assumed that with the chirp-type interference the proposed practice adaptively and dynamically selects the most suitable transform for each situation.

Even though the invention is described above with reference to an example according to the accompanying drawings, it is clear that the invention is not restricted thereto but it can be modified in several ways within the scope of the appended claims.

**Claims**

1. A method for suppressing interference in a radio communications receiver, the method comprising:

   computing at least one transform of a received analog-to-digital converted radio signal;
   computing metrics defining a concentration of an interference present for a transformed radio signal and a non-transformed radio signal;
   selecting for use a transform having metrics indicating a highest concentration of an interference in a transfer domain, or selecting no transform if the metrics indicating the highest concentration of the interference is for the non-transformed signal;
   suppressing a localized interference from the transformed radio signal by using weighting and computing an inverse transform of the transformed radio signal if the transform was selected, or suppressing the localized interference from the non-transformed radio signal by using weighting if no transform was selected; and
   detecting and decoding an interference suppressed radio signal.

2. The method of claim 1, wherein the step of computing comprises computing the metrics comprising Coding Gain.

3. The method of claim 2, wherein the step of computing comprises computing the Coding Gain with the equation

$$CG = \frac{\frac{1}{N}\sum_{n=1}^{N}|r(n)|^2}{N\sqrt[N]{\prod_{n=1}^{N}|r(n)|^2}},$$

   wherein N is the length of the block, and
   r(n) is the received radio signal sample.

4. The method of claim 2, wherein the step of computing comprises examining the Coding Gain as relative magnitudes between different transforms, including a non-transform, and therefore computed with the equation

$$CG' = \frac{1}{N\sqrt[N]{\prod_{n=1}^{N}|r(n)|^2}},$$

   wherein N is the length of the block, and
   r(n) is the received radio signal sample.

5. The method of claim 1, wherein the step of computing comprises calculating the metrics with a Consecutive Mean Excision Algorithm.

6. The method of claim 5, further comprising:

   determining, with the Consecutive Mean Excision Algorithm, a background noise level of the received analog-to-digital converted radio signal; and
   localizing as interference parts of the analog-to-digital converted radio signal exceeding the background noise level.

7. The method of claim 1, wherein step of selecting comprises selecting the transform comprising one of a Fast Fourier Transform, a Fractional Fourier Transform, a Discrete Cosine Transform, a Karhunen-Loeve Transform, a wavelet transform, or another transform having an inverse transform and metrics defining a concentration of the interference present in the transformed radio signal.

8. The method of claim 1, wherein step of selecting comprises selecting a first transform comprising a Fast Fourier Transform, and selecting a second transform comprising a Fractional Fourier Transform.

9. The method of claim 8, further comprising:

performing on a Fast Fourier Transform-transformed signal a Consecutive Mean Excision Algorithm in order to localize the interference and determine a bandwidth of the interference; and
selecting an order of the Fractional Fourier Transform based on the bandwidth of the interference.

10. The method of claim 9, further comprising:

performing a suppression of the localized interference from the transformed radio signal by using results of the Consecutive Mean Excision Algorithm if the Fast Fourier Transform was selected as the transform.

11. The method of claim 1, wherein step of suppressing comprises suppressing the localized interference with a Consecutive Mean Excision Algorithm.

12. An arrangement (106) for interference suppression in a radio communications receiver, the arrangement comprising:

a transformer (110) configured to compute a transform of a received analog-to-digital converted radio signal;
an interference estimator (112, 114) configured to compute metrics defining a concentration of an interference present for a transformed radio signal and a non-transformed radio signal;
a selector coupled (116) to the interference estimator configured to select for use a transform having metrics indicating a highest concentration of an interference in a transfer domain, or to select no transform if the metrics indicating the highest concentration of the interference is for the non-transformed signal;
an interference suppressor (118, 120) coupled to the selector configured to suppress a localized interference from the transformed radio signal by using weighting if the transform was selected, or to suppress the localized interference from the non-transformed radio signal by using weighting if no transform was selected; and
an inverse transformer (122) coupled to the interference suppressor configured to compute an inverse transform of the transformed radio signal if the transform was selected.

13. The arrangement of claim 12, wherein the interference estimator is further configured to estimate the metrics as Coding Gain (200, 204, 214, 218).

14. The arrangement of claim 13, wherein the interference estimator is further configured to compute the Coding Gain with the equation

$$CG = \frac{\frac{1}{N}\sum_{n=1}^{N}|r(n)|^2}{N\sqrt{\prod_{n=1}^{N}|r(n)|^2}},$$

wherein N is the length of the block, and
r(n) is the received radio signal sample.

15. The arrangement of claim 13, wherein the selector is further configured to examine the Coding Gain as relative magnitudes between different transforms, including a non-transform, and the interference estimator is further configured to compute the Coding Gain with the equation

$$CG' = \frac{1}{N\sqrt{\prod_{n=1}^{N}|r(n)|^2}},$$

wherein N is the length of the block, and

r(n) is the received radio signal sample.

16. The arrangement of claim 12, wherein the interference estimator is further configured to calculate the metrics with a Consecutive Mean Excision Algorithm (206).

17. The arrangement of claim 16, wherein the interference estimator is further configured to determine, with the Consecutive Mean Excision Algorithm, a background noise level of the received analog-to-digital converted radio signal, and to localize as interference parts of the analog-to-digital converted radio signal exceeding the background noise level.

18. The arrangement of claim 12, wherein the transformer is configured to use as the transform one of a Fast Fourier Transform (FFT), a Fractional Fourier Transform (FrFT), a Discrete Cosine Transform, a Karhunen-Loeve Transform, a wavelet transform, or another transform having an inverse transform and metrics defining a concentration of the interference present in the transformed radio signal.

19. The arrangement of claim 12, wherein the arrangement comprises at least a first transformer and a second transformer, wherein the first transformer is configured to use a Fast Fourier Transform as the transform, and the second transformer is configured to use a Fractional Fourier Transform as the transform.

20. The arrangement of claim 19, further comprising:

a Consecutive Mean Excision Algorithm processor coupled to the first transformer configured to perform on a Fast Fourier Transform-transformed signal a Consecutive Mean Excision Algorithm in order to localize the interference;
a bandwidth determiner (BW) coupled to the Consecutive Mean Excision Algorithm processor configured to determine the bandwidth of the interference; and
an order determiner (210) coupled to the bandwidth determiner and to the second transformer configured to determine an order of the Fractional Fourier Transform based on the bandwidth of the interference and to supply the order of the Fractional Fourier Transform to the second transformer.

21. The arrangement of claim 20, wherein the interference suppressor is configured to suppress the localized interference from the transformed radio signal by using results of the Consecutive Mean Excision Algorithm performed in the Consecutive Mean Excision Algorithm processor if the Fast Fourier Transform was selected as the transform.

22. The arrangement of claim 12, wherein the interference suppressor is configured to suppress the localized interference with a Consecutive Mean Excision Algorithm.

23. The arrangement of claim 12, wherein a radio communications receiver comprises a radio frequency processing part, and the arrangement is further configured to receive information on interference present in the received analog-to-digital converted radio signal from the radio frequency processing part and to utilize the received information in the interference estimator and the interference suppressor for localizing and suppressing the interference.

24. The arrangement of claim 12, wherein the arrangement is coupled to an input of a signal detector and an input of a decoder of a radio communications receiver.

25. A radio communications receiver comprising:

computing means (110) for computing at least one transform of a received analog-to-digital converted radio signal;
computing means (112, 114) for computing metrics defining a concentration of an interference present for a transformed radio signal and a non-transformed radio signal;
selecting means (116) for selecting for use a transform having metrics indicating a highest concentration of an interference in a transfer domain, or for selecting no transform if the metrics indicating the highest concentration of the interference is for the non-transformed signal;
suppressing means (118, 120) for suppressing a localized interference from the transformed radio signal by using weighting and for computing an inverse transform of the transformed radio signal if the transform was selected, or for suppressing the localized interference from the non-transformed radio signal by using weighting if no transform was selected; and

detecting means (124) for detecting and decoding an interference suppressed radio signal.

**Patentansprüche**

1. Verfahren zum Unterdrücken von Interferenz in einem Funkkommunikationsempfänger, wobei das Verfahren umfasst:

   - Berechnen von mindestens einer Transformation eines empfangenen analog-digital gewandelten Funksignals;
   - Berechnen von Metriken, die eine Konzentration einer Interferenz definieren, die für ein transformiertes Funksignal und ein nicht transformiertes Funksignal vorhanden ist;
   - Auswählen einer Transformation zur Verwendung, die Metriken aufweist, die eine höchste Konzentration einer Interferenz in einem Übertragungsbereich angeben, oder keine Transformation auswählen, falls die Metriken, welche die höchste Konzentration der Interferenz angeben, die für das nicht transformierte Signal sind;
   - Unterdrücken einer lokalisierten Interferenz von dem transformierten Funksignal durch Verwenden von Gewichtung und Berechnen einer inversen Transformation des transformierten Funksignals, falls die Transformation ausgewählt wurde, oder Unterdrücken der lokalisierten Interferenz von dem nicht transformierten Funksignal durch Verwenden von Gewichtung, falls keine Transformation ausgewählt wurde; und
   - Erfassen und Dekodieren eines Funksignals mit unterdrückter Interferenz.

2. Verfahren nach Anspruch 1, wobei der Schritt des Berechnens umfasst

   - Berechnen der Metriken umfassend Coding Gain.

3. Verfahren nach Anspruch 2, wobei der Schritt des Berechnens umfasst

   - Berechnen des Coding Gain mit der Gleichung

$$CG = \frac{\frac{1}{N}\sum_{n=1}^{N}|r(n)|^2}{N\sqrt{\prod_{n=1}^{N}|r(n)|^2}},$$

   wobei N die Länge des Blocks ist; und
   r(n) der empfangene Funksignal-Abtastwert ist.

4. Verfahren nach Anspruch 2, wobei der Schritt des Berechnens umfasst

   - Prüfen des Coding Gain als relative Werte zwischen verschiedenen Transformationen, einschließlich einer nicht- Transformation, und daher berechnet mit der Gleichung

$$CG' = \frac{1}{N\sqrt{\prod_{n=1}^{N}|r(n)|^2}},$$

   wobei N die Länge des Blocks ist; und
   r(n) der empfangene Funksignal-Abtastwert ist.

5. Verfahren nach Anspruch 1, wobei der Schritt des Berechnens umfasst

   - Errechnen der Metriken mit einem Consecutive Mean Excision Algorithmus.

6. Verfahren nach Anspruch 5, weiter umfassend:

   - Bestimmen eines Hintergrundrauschpegels des empfangenen analog-digital gewandelten Funksignals, mit dem Consecutive Mean Excision Algorithmus; und
   - Lokalisieren von Teilen des analog-digital gewandelten Funksignals, die den Hintergrundrauschpegel überschreiten, als Interferenz.

7. Verfahren nach Anspruch 1, wobei der Schritt des Auswählens umfasst

   - Auswählen der Transformation umfassend eines von einer Fast Fourier Transformation, einer Fractional Fourier Transformation, einer Discrete Cosine Transformation, einer Karhunen-Loeve Transformation, einer Wavelet-Transformation, oder einer anderen Transformation mit einer inversen Transformation und Metriken, welche eine Konzentration der Interferenz definieren, die in dem umgewandelten Funksignal vorhanden ist.

8. Verfahren nach Anspruch 1, wobei der Schritt des Auswählens umfasst

   - Auswählen einer ersten Transformation umfassend eine Fast Fourier Transformation; und
   - Auswählen einer zweiten Transformation umfassend eine Fractional Fourier Transformation.

9. Verfahren nach Anspruch 8, weiter umfassend:

   - Ausführen eines Consecutive Mean Excision Algorithmus an einem mittels Fast Fourier Transformation transformierten Signal, um die Interferenz zu lokalisieren und eine Bandbreite der Interferenz zu bestimmen; und
   - Auswählen einer Ordnung der Fractional Fourier Transformation basierend auf der Bandbreite der Interferenz.

10. Verfahren nach Anspruch 9, weiter umfassend:

    - Ausführen einer Unterdrückung der lokalisierten Interferenz von dem umgewandelten Funksignal durch Verwenden von Ergebnissen des Consecutive Mean Excision Algorithmus, falls die Fast Fourier Transformation als die Transformation ausgewählt wurde.

11. Verfahren nach Anspruch 1, wobei der Schritt des Unterdrückens umfasst

    - Unterdrücken der lokalisierten Interferenz mit einem Consecutive Mean Excision Algorithmus.

12. Anordnung (106) zur Interferenzunterdrückung in einem Funkkommunikationsempfänger, wobei die Anordnung umfasst:

    - einen Wandler (110), der konfiguriert ist zum Berechnen einer Transformation eines empfangenen analog-digital gewandelten Funksignals;
    - einen Interferenzabschätzer (112, 114), der konfiguriert ist zum Berechnen von Metriken, die eine Konzentration einer Interferenz definieren, die für ein transformiertes Funksignal und ein nicht transformiertes Funksignal vorhanden ist;
    - eine Auswahleinrichtung (116), die mit dem Interferenzabschätzer gekoppelt ist, die konfiguriert ist, eine Transformation zur Verwendung auszuwählen, die Metriken aufweist, die eine höchste Konzentration einer Interferenz in einem Übertragungsbereich angeben, oder keine Transformation auszuwählen, falls die Metriken, welche die höchstes Konzentration der Interferenz angeben, die für das nicht transformierte Signal sind;
    - einen Interferenzunterdrücker (118, 120), der mit der Auswahleinrichtung gekoppelt ist, und konfiguriert ist zum Unterdrücken einer lokalisierten Interferenz von dem transformierten Funksignal durch Verwendung einer Gewichtung, falls die Transformation ausgewählt wurde, oder zum Unterdrücken der lokalisierten Interferenz von dem nicht transformierten Funksignal durch Verwendung von Gewichtung, falls keine Transformation ausgewählt wurde; und
    - einen Invers-Wandler (122), der mit dem Interferenzunterdrücker gekoppelt ist, der konfiguriert ist zum Berechnen einer inversen Transformation des transformierten Funksignals, falls die Transformation ausgewählt wurde.

13. Anordnung nach Anspruch 12, wobei der Interferenzabschätzer weiter konfiguriert ist zum Abschätzen der Metriken als Coding Gain (200, 204, 214, 218).

**14.** Anordnung nach Anspruch 13, wobei der Interferenzabschätzer weiter konfiguriert ist, den Coding Gain zu berechnen mit der Gleichung

$$CG = \frac{\frac{1}{N}\sum_{n=1}^{N}\left|r(n)\right|^2}{N\sqrt{\prod_{n=1}^{N}\left|r(n)\right|^2}},$$

wobei N die Länge des Blocks ist; und
r(n) der empfangene Funksignal-Abtastwert ist.

**15.** Anordnung nach Anspruch 13, wobei die Auswahleinrichtung weiter konfiguriert ist zum Prüfen des Coding Gain als relative Werte zwischen verschiedenen Transformationen, einschließlich einer nicht-Transformation, und der Interferenzabschätzer weiter konfiguriert ist zum Berechnen des Coding Gain mit der Gleichung

$$CG' = \frac{1}{N\sqrt{\prod_{n=1}^{N}\left|r(n)\right|^2}},$$

wobei N die Länge des Blocks ist; und
r(n) der empfangene Funksignal-Abtastwert ist.

**16.** Anordnung nach Anspruch 12, wobei der Interferenzabschätzer weiter konfiguriert ist, die Metriken mit einem Consecutive Mean Excision Algorithmus (206) zu errechnen.

**17.** Anordnung nach Anspruch 16, wobei der Interferenzabschätzer weiter konfiguriert ist, mit dem Consecutive Mean Excision Algorithmus einen Hintergrundrauschpegel des empfangenen analog-digital gewandelten Funksignals zu bestimmen, und Teile des analog-digital gewandelten Funksignals, die den Hintergrundrauschpegel überschreiten, als Interferenz zu lokalisieren.

**18.** Anordnung nach Anspruch 12, wobei der Wandler konfiguriert ist, als die Transformation eines von einer Fast Fourier Transformation (FFT), einer Fractional Fourier Transformation (FrFT), einer Discrete Cosine Transformation, einer Karhunen-Loeve Transformation, einer Wavelet-Transformation, oder einer anderen Transformation mit einer inversen Transformation und Metriken zu verwenden, welche eine Konzentration der Interferenz definieren, die in dem umgewandelten Funksignal vorhanden ist.

**19.** Anordnung nach Anspruch 12, wobei die Anordnung mindestens einen ersten Wandler und einen zweiten Wandler umfasst, wobei der erste Wandler konfiguriert ist, eine Fast Fourier Transformation als die Transformation zu verwenden, und der zweite Wandler konfiguriert ist, eine Fractional Fourier Transformation als die Transformation zu verwenden.

**20.** Anordnung nach Anspruch 19, weiter umfassend:

- einen Consecutive Mean Excision Algorithmus-Prozessor, der mit dem ersten Wandler gekoppelt ist, der konfiguriert ist zum Ausführen eines Consecutive Mean Excision Algorithmus an einem mittels Fast Fourier Transformation umgewandelten Signal, um die Interferenz zu lokalisieren;
- eine Bandbreitenbestimmungseinrichtung (BW), die mit dem Consecutive Mean Excision Algorithmus-Prozessor gekoppelt ist, die konfiguriert ist zum Bestimmen der Bandbreite der Interferenz; und
- eine Ordnungsbestimmungseinrichtung (210), die mit der Bandbreitenbestimmungseinrichtung und mit dem zweiten Wandler gekoppelt ist, die konfiguriert ist zum Bestimmen einer Ordnung der Fractional Fourier Transformation basierend auf der Bandbreite der Interferenz, und um dem zweiten Wandler die Ordnung der Fractional Fourier Transformation bereitzustellen.

21. Anordnung nach Anspruch 20, wobei der Interferenzunterdrücker konfiguriert ist zum Unterdrücken der lokalisierten Interferenz von dem umgewandelten Funksignal, durch Verwenden von Ergebnissen des Consecutive Mean Excision Algorithmus, der in dem Consecutive Mean Excision Algorithmus-Prozessor ausgeführt wurde, falls die Fast Fourier Transformation als die Transformation ausgewählt wurde.

22. Anordnung nach Anspruch 12, wobei der Interferenzunterdrücker konfiguriert ist zum Unterdrücken der lokalisierten Interferenz mit einem Consecutive Mean Excision Algorithmus.

23. Anordnung nach Anspruch 12, wobei ein Funkkommunikationsempfänger einen Funkfrequenz-Verarbeitungsteil umfasst, und die Anordnung weiter konfiguriert ist zum Empfangen von Informationen von dem Funkfrequenz-Verarbeitungsteil über Interferenz, die in dem empfangenen analog-digital gewandelten Funksignal vorhanden ist, und um die empfangenen Informationen in dem Interferenzabschätzer und dem Interferenzunterdrücker zu verwenden, um die Interferenz zu lokalisieren und zu unterdrücken.

24. Anordnung nach Anspruch 12, wobei die Anordnung mit einem Eingang eines Signaldetektors und einem Eingang eines Dekoders eines Funkkommunikationsempfängers gekoppelt ist.

25. Funkkommunikationsempfänger, umfassend:

- Berechnungsmittel (110) zum Berechnen von mindestens einer Transformation eines empfangenen analog-digital gewandelten Funksignals;
- Berechnungsmittel (112, 114) zum Berechnen von Metriken, die eine Konzentration einer Interferenz definieren, die für ein transformiertes Funksignal und ein nicht transformiertes Funksignal vorhanden ist;
- Auswahlmittel (116) zum Auswählen zur Verwendung einer Transformation mit Metriken, die eine höchste Konzentration einer Interferenz in einem Übertragungsbereich angeben, oder um keine Transformation auszuwählen, falls die Metriken, welche die höchste Konzentration der Interferenz angeben, die für das nicht transformierte Signal ist;
- Unterdrückungsmittel (118, 120) zum Unterdrücken einer lokalisierten Interferenz von dem transformierten Funksignal durch Verwenden von Gewichtung und zum Berechnen einer inversen Transformation des transformierten Funksignals, falls die Transformation ausgewählt wurde, oder zum Unterdrücken der lokalisierten Interferenz von dem nicht transformierten Funksignal durch Verwenden von Gewichtung, falls keine Transformation ausgewählt wurde; und
- Erfassungsmittel (124) zum Erfassen und Dekodieren eines Funksignals mit unterdrückter Interferenz.

**Revendications**

1. Procédé de suppression des interférences dans un récepteur de radiocommunications, le procédé comprenant :

le calcul d'au moins une transformée d'un signal radio reçu converti de manière analogique - numérique ;
le calcul d'une métrique définissant une concentration des interférences présentes pour un signal radio transformé et un signal radio non transformé ;
la sélection en vue de son utilisation d'une transformée ayant une métrique qui indique la concentration la plus élevée en interférences dans un domaine de transfert, ou la sélection d'aucune transformée si la métrique qui indique la concentration la plus élevée en interférences est pour le signal non transformé ;
la suppression des interférences localisées provenant du signal radio transformé en utilisant une pondération et un calcul d'une transformée inverse du signal radio transformé si la transformée a été sélectionnée, ou la suppression des interférences localisées provenant du signal radio non transformé en utilisant une pondération si aucune transformée n'a été sélectionnée ; et
la détection et le décodage d'un signal radio dont les interférences ont été supprimées.

2. Procédé selon la revendication 1, dans lequel l'étape de calcul comprend le calcul de la métrique comprenant un Gain de Codage.

3. Procédé selon la revendication 2, dans lequel l'étape de calcul comprend le calcul du Gain de Codage grâce à l'équation :

$$CG = \frac{\frac{1}{N}\sum_{n=1}^{N}|r(n)|^2}{N\sqrt{\prod_{n=1}^{N}|r(n)|^2}}$$

dans laquelle N est la longueur du bloc, et
r(n) est l'échantillon du signal radio reçu.

4. Procédé selon la revendication 2, dans lequel l'étape de calcul comprend l'examen du Gain de Codage comme des grandeurs relatives entre différentes transformées, y compris une non transformée, et donc calculé grâce à l'équation :

$$CG' = \frac{1}{N\sqrt{\prod_{n=1}^{N}|r(n)|^2}}$$

dans laquelle N est la longueur du bloc, et
r(n) est l'échantillon du signal radio reçu.

5. Procédé selon la revendication 1, dans lequel l'étape de calcul comprend le calcul de la métrique à l'aide d'un Algorithme d'Excision à Moyenne Mobile.

6. Procédé selon la revendication 5, comprenant en outre :

la détermination, à l'aide de l'Algorithme d'Excision à Moyenne Mobile, d'un niveau de bruit de fond du signal radio reçu converti de manière analogique - numérique ; et
la localisation comme parties d'interférences du signal radio converti de manière analogique - numérique dépassant le niveau du bruit de fond.

7. Procédé selon la revendication 1, dans lequel l'étape de sélection comprend la sélection d'une transformée choisie parmi l'une des suivantes :

Transformée de Fourier Rapide, une Transformée de Fourier Fractionnaire, une Transformée en Cosinus Discrète, une Transformée de Karhunen - Loeve, une transformée en ondelette, ou autres transformées ayant une transformée inverse et une métrique définissant une concentration des interférences présentes dans le signal radio transformé.

8. Procédé selon la revendication 1, dans lequel l'étape de sélection comprend la sélection d'une première transformée comprenant une Transformée de Fourier Rapide, et la sélection d'une seconde transformée comprenant une Transformée de Fourier Fractionnaire.

9. Procédé selon la revendication 8, comprenant en outre :

l'exécution sur un signal transformé par une Transformée de Fourier Rapide d'un Algorithme d'Excision à Moyenne Mobile de manière à localiser les interférences et à déterminer une largeur de bande des interférences ; et
la sélection d'un ordre de la Transformée de Fourier Fractionnaire sur la base de la largeur de bande des interférences.

10. Procédé selon la revendication 9, comprenant en outre :

l'exécution d'une suppression des interférences localisées provenant du signal radio transformé en utilisant les résultats de l'Algorithme d'Excision à Moyenne Mobile si la Transformée de Fourier Rapide a été sélectionnée en tant que transformée.

**11.** Procédé selon la revendication 1, dans lequel l'étape de suppression comprend la suppression des interférences localisées grâce à un Algorithme d'Excision à Moyenne Mobile.

**12.** Agencement (106) de suppression des interférences dans un récepteur de radiocommunications, l'agencement comprenant :

un transformateur (110) configuré de manière à calculer une transformée d'un signal radio reçu converti de manière analogique - numérique ;
un estimateur d'interférences (112, 114) configuré de manière à calculer une métrique définissant une concentration des interférences présentes pour un signal radio transformé et un signal radio non transformé ;
un sélecteur (116) couplé à l'estimateur d'interférences configuré de manière à sélectionner pour une utilisation une transformée ayant une métrique qui indique la concentration la plus élevée en interférences dans un domaine de transfert, ou à ne sélectionner aucune transformée si la métrique qui indique la concentration la plus élevée en interférences est pour le signal non transformé ;
un suppresseur d'interférences (118, 120) couplé au sélecteur configuré de manière à supprimer des interférences localisées provenant du signal radio transformé en utilisant une pondération si la transformée a été sélectionnée, ou à supprimer les interférences localisées provenant du signal radio non transformé en utilisant une pondération si aucune transformée n'a été sélectionnée ; et
un transformateur inverse (122) couplé au suppresseur d'interférences configuré de manière à calculer une transformée inverse du signal radio transformé si la transformée a été sélectionnée.

**13.** Agencement selon la revendication 12, dans lequel l'estimateur d'interférences est en outre configuré de manière à estimer la métrique en tant que Gain de Codage (200, 204, 214, 218).

**14.** Agencement selon la revendication 13, dans lequel l'estimateur d'interférences est en outre configuré de manière à calculer le Gain de Codage grâce à l'équation :

$$CG = \frac{\frac{1}{N}\sum_{n=1}^{N}|r(n)|^2}{N\sqrt{\prod_{n=1}^{N}|r(n)|^2}}$$

dans laquelle N est la longueur du bloc, et
r(n) est l'échantillon du signal radio reçu.

**15.** Agencement selon la revendication 13, dans lequel le sélecteur est en outre configuré de manière à examiner le Gain de Codage comme des grandeurs relatives entre différentes transformées, y compris une non transformée, et l'estimateur d'interférences est en outre configuré pour calculer le Gain de Codage grâce à l'équation :

$$CG' = \frac{1}{N\sqrt{\prod_{n=1}^{N}|r(n)|^2}}$$

dans laquelle N est la longueur du bloc, et
r(n) est l'échantillon du signal radio reçu.

**16.** Agencement selon la revendication 12, dans lequel l'estimateur d'interférences est en outre configuré de manière à calculer la métrique grâce à un Algorithme d'Excision à Moyenne Mobile (206).

17. Agencement selon la revendication 16, dans lequel l'estimateur d'interférences est en outre configuré de manière à déterminer, grâce à l'Algorithme d'Excision à Moyenne Mobile, un niveau de bruit de fond du signal radio reçu converti de manière analogique - numérique, et de manière à localiser comme parties d'interférences du signal radio converti de manière analogique - numérique dépassant le niveau de bruit de fond.

18. Agencement selon la revendication 12, dans lequel le transformateur est configuré de manière à utiliser en tant que transformée, une choisie parmi l'une des suivantes : une Transformée de Fourier Rapide (FFT), une Transformée de Fourier Fractionnaire (FrFT), une Transformée en Cosinus Discrète, une Transformée de Karhunen - Loeve, une transformée en ondelette, ou autres transformées ayant une transformée inverse et une métrique définissant une concentration des interférences présentes dans le signal radio transformé.

19. Agencement selon la revendication 12, dans lequel l'agencement comprend au moins un premier transformateur et un second transformateur, dans lequel le premier transformateur est configuré de manière à utiliser une Transformée de Fourier Rapide en tant que transformée, et le second transformateur est configuré de manière à utiliser une Transformée de Fourier Fractionnaire en tant que transformée.

20. Agencement selon la revendication 19, comprenant en outre :

un processeur d'Algorithme d'Excision à Moyenne Mobile couplé au premier transformateur configuré de manière à exécuter sur un signal transformé par une Transformée de Fourier Rapide un Algorithme d'Excision à Moyenne Mobile afin de localiser les interférences ;
un détermineur de largeur de bande (BW) couplé au processeur d'Algorithme d'Excision à Moyenne Mobile configuré de manière à déterminer la largeur de bande des interférences ; et
un détermineur d'ordre (210) couplé au détermineur de largeur de bande et au second transformateur configuré de manière à déterminer un ordre d'une Transformée de Fourier Fractionnaire sur la base de la largeur de bande des interférences et de manière à fournir l'ordre de la Transformée de Fourier Fractionnaire au second transformateur.

21. Agencement selon la revendication 20, dans lequel le suppresseur d'interférences est configuré de manière à supprimer les interférences localisées provenant du signal radio transformé en utilisant les résultats de l'Algorithme d'Excision à Moyenne Mobile exécuté dans le processeur d'Algorithme d'Excision à Moyenne Mobile si la Transformée de Fourier Rapide a été sélectionnée en tant que transformée.

22. Agencement selon la revendication 12, dans lequel le suppresseur d'interférences est configuré de manière à supprimer les interférences localisées grâce à un Algorithme d'Excision à Moyenne Mobile.

23. Agencement selon la revendication 12, dans lequel un récepteur de radiocommunications comprend une partie de traitement des fréquences radio, et l'agencement est en outre configuré de manière à recevoir des informations sur les interférences présentes dans le signal radio reçu converti de manière analogique - numérique provenant de la partie de traitement des fréquences radio, et de manière à utiliser les informations reçues dans l'estimateur d'interférences et le suppresseur d'interférences pour la localisation et la suppression des interférences.

24. Agencement selon la revendication 12, dans lequel l'agencement est couplé à une entrée d'un détecteur de signaux et à une entrée d'un décodeur d'un récepteur de radiocommunications.

25. Récepteur de radiocommunications comprenant :

des moyens de calcul (110) pour calculer au moins une transformée d'un signal radio reçu converti de manière analogique - numérique ;
des moyens de calcul (112, 114) pour calculer une métrique définissant une concentration des interférences présentes pour un signal radio transformé et un signal radio non transformé ;
des moyens de sélection (116) pour sélectionner une utilisation d'une transformée ayant une métrique qui indique la concentration la plus élevée en interférences dans un domaine de transfert, ou pour ne sélectionner aucune transformée si la métrique qui indique la concentration la plus élevée en interférences est pour le signal non transformé ;
des moyens de suppression (118, 120) pour supprimer des interférences localisées provenant du signal radio transformé en utilisant une pondération et pour calculer une transformée inverse du signal radio transformé si la transformée a été sélectionnée, ou pour supprimer les interférences localisées provenant du signal radio non transformé en utilisant une pondération si aucune transformée n'a été sélectionnée ; et

des moyens de détection (124) pour détecter et décoder un signal radio dont les interférences ont été supprimées.

FIG. 1

FIG. 2

FIG. 4

FIG. 5

( 300 START )

↓

| 302 RECEIVE SIGNAL |

↓

| 304 A/D-CONVERT SIGNAL |

↓

| 306 COMPUTE 1ST TRANSFORM | . . . | 308 COMPUTE N:TH TRANSFORM |

↓ ↓

| 310 COMPUTE INTERFERENCE CONCENTRATION | . . . | 312 COMPUTE INTERFERENCE CONCENTRATION | | 314 COMPUTE INTERFERENCE CONCENTRATION |

↓

| 316 SELECT THE TRANSFORM / NO TRANSFORM WITH THE HIGHEST INTERFERENCE CONCENTRATION |

↓

| 318 SUPPRESS INTERFERENCE |

↓

| 320 IF TRANSFORM SELECTED, COMPUTE INVERSE TRANSFORM |

↓

| 322 DETECT & DECODE |

↓

( 324 END )

FIG. 3

**FIG. 6**

**FIG. 7**

SINUSOIDAL INTERFERENCE
Eb/No = 15 dB, I/S = 30 dB FOR EACH SINUSOID, 63-CHIP CODE

FIG. 8

SINUSOIDAL INTERFERENCE (8 SINUSOIDS)
Eb/No = 15 dB, 63-CHIP CODE

FIG. 9

CHIRP INTERFERENCE
Eb/No=15 dB, 63-CHIP CODE

FIG. 10

RAISED COSINE BPSK-INTERFERENCE
Eb/No=15 dB, I/S=30 dB, 63-CHIP CODE

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 02091610 A

### Non-patent literature cited in the description

- **KOK C. W. ; NGUYEN T.Q.** Multirate Filter Banks and Transform Coding Gain. *IEEE Transactions on Signal Processing,* 1998, vol. 46 (7), 2041-2044
- **GONZALEZ R. E. ; WOODS R. C.** *Digital Image Processing,* 2002, 372-376470-479
- **HAYKIN S.** *Adaptive Filter Theory,* 1996
- **HENTTU P. ; AROMAA S.** Proceedings of IEEE International Symposium on Spread Spectrum Techniques and Applications. *Consecutive Mean Excision Algorithm,* 2002, vol. 2, 450-454